(19) Europäisches Patentamt
European Patent Office
Office européen des brevets

(11) **EP 3 333 548 A1**

(12) **EUROPEAN PATENT APPLICATION**

(43) Date of publication:
**13.06.2018 Bulletin 2018/24**

(51) Int Cl.:
***G01D 4/00*** *(2006.01)*

(21) Application number: **16020486.3**

(22) Date of filing: **08.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Zahnd, Stefan**
**6317 Overwil bei Zug (CH)**

(72) Inventor: **Zahnd, Stefan**
**6317 Overwil bei Zug (CH)**

(54) **METHOD FOR SIMULTANEOUS, SYNCHRONOUS AND NON-INVASIVE MONITORING, DATA LOGGING, AND DATA DISAGGREGATION FROM MULTIPLE POWER-, ENERGY-, CURRENT-, VOLTAGE-, TEMPERATURE-, POWER FACTOR-, AND POWER FREQUENCY SENSORS CONNECTED IN AN AUTONOMOUS LOCAL NETWORK**

(57) The described invention presents a method for simultaneous, synchronous and non-invasive monitoring, data logging and data disaggregation from multiple power-, energy-, current-, voltage-, temperature-, power factor-, and power frequency sensors connected in an autonomous local network (1). It provides a mediation layer (2) to any computer in the local network that will enable detection of any of said sensors (3) in the network. When a sensor is detected, the provided mediation layer will choose the correct data logging algorithm (4) to communicate with and log data from the detected sensor. The data logged from said detected sensor will then be stored in a standardized format (5) that can directly be used as a basis for the data disaggregation algorithm, which is provided in the profiler layer (6). Both the mediation and the profiler layer are controlled via a web interface (7).

Figure 1

**Description**

BACKGROUND OF THE INVENTION

Field of the Invention

The described invention relates to a method for simultaneous, synchronous and non-invasive monitoring, data logging and data disaggregation from multiple power-, energy-, current-, voltage-, temperature-, power factor-, and power frequency sensors connected in an autonomous local network without requiring any connection to the internet or any database therein.

Description of Prior Art

The field of energy optimization recently gained increasing attention. The most common approach consists of measuring i.e. a power usage sensor over a certain period, followed by energy disaggregation to identify specific energy loads in the power profile being monitored. This has been used, for example, to monitor the power profile of a single-family household and to identify energy loads (i.e. power usage) and power profiles of the different household devices (microwave, oven, etc.). The sensors used for monitoring power usage are typically connected to an online database for data storage. Examples include the "Youless" Energy Monitor (www.youless.nl) or "The Owl" Smart Energy Monitors (www.theowl.com). Similarly, power profiles for the different energy loads are typically extracted from the measured power usage data using a database of previously characterized energy profiles as a basis. This approach, while effective, is very time-consuming and requires extensive computational effort.

However, synchronous measuring of sensors i.e. energy usage and extracting particular energy loads and data profiles often remains challenging. This is because of a number of different reasons, some of which include:

• No available internet connection either because monitored sensor data are confidential and transmission to an online database would pose a security threat (e.g. in a banking environment)
• The necessary infrastructure to connect the sensors to the internet is not available at the site of monitoring
• Temporary failure of the internet connection or the power supply of the sensors (e.g. battery running dry) causing missing values in the monitored data
• Multiple sites requiring simultaneous, synchronous and non-invasive monitoring and data disaggregation in order to capture the full profile, e.g. the power usage profile of an industrial facility with multiple production buildings

In this last case, the situation may be further complicated if the current range being monitored at the different locations exceeds the dynamic range for one particular sensor, so that two or more types sensors are required to capture the full profile. As the data formats for different sensors are mostly unique, analysis will be very difficult when data from two or more different sensors must be combined in order to apply any data disaggregation or similar algorithms.

Summary of the Invention

The present invention provides a method allowing simultaneous, synchronous and non-invasive monitoring, data logging, and data disaggregation (i.e. profiling) from multiple power-, energy-, current-, voltage-, temperature-, power factor-, and power frequency sensors connected in an autonomous local network. The method provides a mediation layer to any computer in the network that will enable detection and monitoring of any sensors that are also part of the autonomous local network, in addition to storing the data monitored from said sensors in a standardized format and without the need to connect to an online database. This mediation layer is controlled via a web interface by the user. Additionally, the method provides a profiler layer providing a data disaggregation algorithm that can directly be applied to the data stored in said standardized format.

The previous general description is intended to provide further explanation of the claimed invention. New features of the invention will be apparent from the following detailed description, drawings and claims.

Description of Drawings

The presented invention may be best understood by reference to the following detailed description together with the accompanying drawings. These include:

Figure 1, which is a schematic view of the present invention.
Figure 2, which is a schematic view describing the detection of and data logging from sensors in a local network according to the present invention.

Figure 3, which is a schematic view describing a logging event.

Figure 4, which is a schematic view of how raw data are processed according to the presented method for adjusting the resolution, applied to a representative dataset.

Figure 5, which is a schematic view of how resolution-adjusted data are smoothed according to the presented method under the circumstance that conditions [2.6] and [2.7] are not met, applied to a representative dataset.

Figure 6, which is a schematic view of how raw data are smoothed according to the presented method under the circumstance that conditions [2.6] and [2.7] are met, applied to a representative dataset.

Figure 7, which is a schematic view of a representative data set in its raw form (top), after resolution correction (middle), and after resolution correction and data smoothing (bottom).

Figure 8, which is a schematic view of steps 1 and 2 in the energy load extraction procedure as described in the text applied to a representative dataset.

Figure 9, which is a schematic view of the first part of step 3 in the energy load extraction procedure as described in the text using a representative data set. The procedure is continued in figure 10.

Figure 10, which is a continuation of figure 9 and displays the second part of step 3 of the energy load extraction procedure as described in the text using a representative dataset.

Detailed Description of the Invention

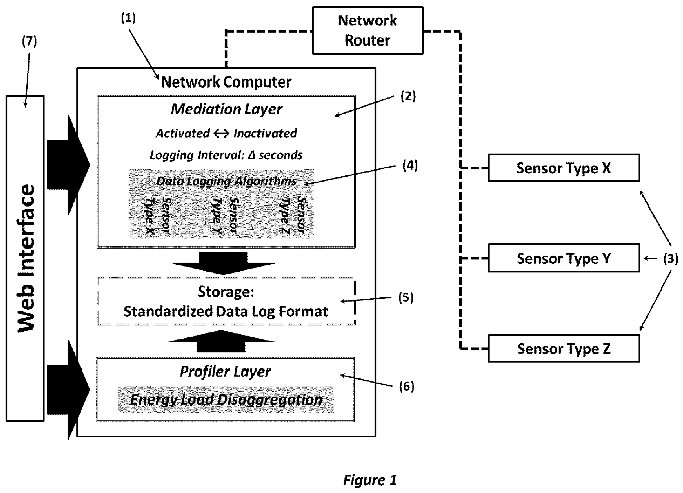

The present invention (figure 1) provides a method allowing simultaneous, synchronous and non-invasive monitoring, data logging, and data disaggregation (profiling) from multiple power-, energy-, current-, voltage-, temperature-, power factor-, and power frequency sensors connected in an autonomous local network (1). The method provides a mediation layer (2) to any computer in the local network that will enable detection of any sensors (3) in the network. In the case that a sensor is detected, the mediation layer will choose the correct data logging algorithm (4) to communicate with and log data from the detected sensor. The data logged from said detected sensor will be stored in a standardized format (5) that can be used as a basis for the provided profiler layer (6). The provided mediation layer is controlled and activated by the user via a web interface (7).

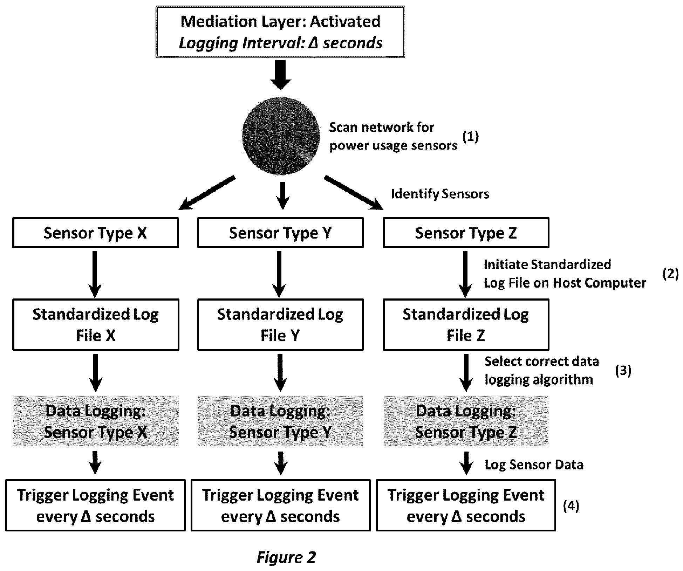

Upon activation of the mediation layer by the user (figure 2), the local network will be scanned for any power-, energy-, current-, voltage-, temperature-, power factor-, and power frequency sensors (1). In the case any such a sensor is detected, a data log file matching the format of the detected sensor will be initiated on the computer hosting the mediation layer (2), the data logging algorithm specific for extracting data from the detected sensor will be selected (3), and a data logging event will be triggered at defined time intervals $\Delta$, where $\Delta \geq 60\,\text{s}$ (4). The value of $\Delta$ may be specified by the user in the mediation layer. Said data logging events will be triggered at intervals of $\Delta$ for each logger until the mediation layer is inactivated by the user, at which point the data log file will be closed and no more data logging events will be triggered for sensors in the network until the mediation layer is reactivated.

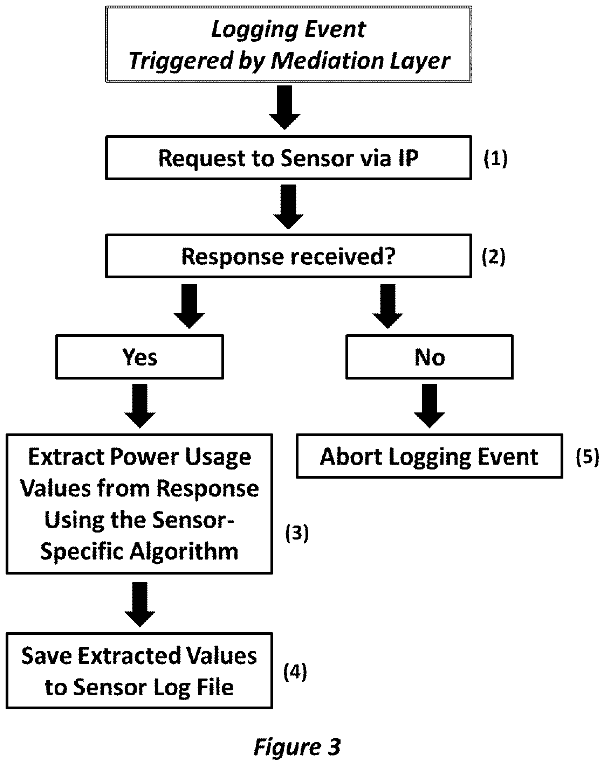

Said data logging events are initiated by the mediation layer (figure 3) and characterized by I) a request to the sensor as identified via its IP address in the scan of the local network (1), II) determination whether a response is received from the sensor (2), III) extraction of the value monitored by said sensor from the response at the time of request using the specifically selected algorithm (3), said response being a character string, and IV) storage of the extracted value and the timestamp at time of request in the log file for said sensor. In case no response is received from the sensor, the logging event is aborted (5) and will be triggered again at the beginning of the next time interval.

In addition to the mediation layer, the method described also provides a method for data disaggregation (referred to as the profiler layer from here on) on the data logged with the previously described method in said standardized format. The aim of this method in the profiler layer is to extract the time points at which changes in the sensor data streams occur (i.e. 'energy loads' turned on or off) using the described method, a process that is also referred to as 'energy load disaggregation' or 'profiling'. This method is provided in the profiler layer of the method described in this document. This layer is also accessible to the user via a web interface. The profiler layer contains different parameters used in processing the sensors input data stream to perform a data disaggregation analysis, all of which are adjustable by the user via the web interface. The following table lists all parameters used by the profiler layer, the conditions for these parameters, and their notation in this document:

| Parameter | Notation | Condition(s) |
|---|---|---|
| Total Number of Data Points in the processed Dataset | $n$ | $n \in \mathbb{N}^+$ |
| Vector of Sensor Values | $\boldsymbol{V} = (V_1, V_2, V_3, ..., V_n)$ | |
| Index in $\boldsymbol{V}$ | $i$ | $i \in \{1, 2, ..., n\}$ |

(continued)

| Parameter | Notation | Condition(s) |
|---|---|---|
| Tolerance (in %) | $T$ | $1 \leq T \leq 100$ |
| Resolution | $R$ | $R > 0$ |
| Maximum Number of Users Detected | $U_{max}$ | $U_{max} \in \mathbb{N}^+$ |
| Percent-of-Maximum Tolerance (in %) | $P_{Tol}$ | $1 \leq P_{Tol} \leq 100$ |

Once all parameters have been adjusted, the user may initiate the data disaggregation method on one of the datasets logged via the method provided in the mediation layer. Both the selection of the dataset and the adjustment of parameters are done via the web interface to the profiler layer. Upon initiation, the method will perform the following steps:

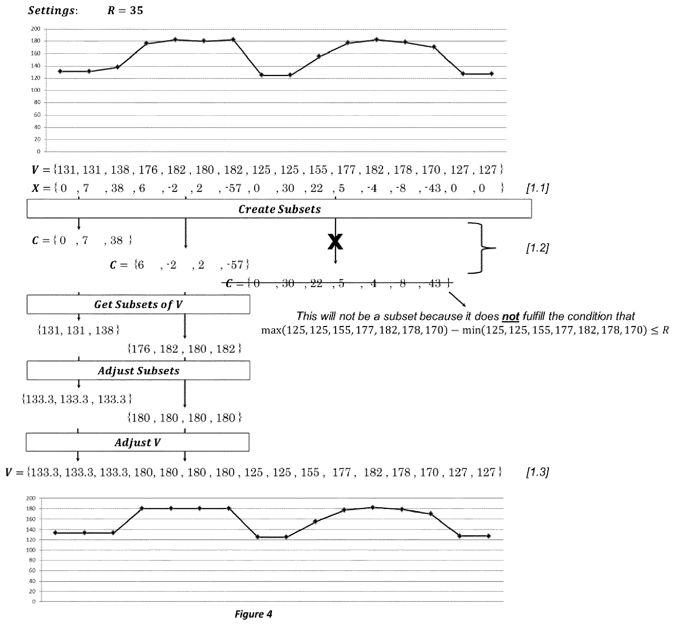

*Adjust the data resolution (figure 4):*

A temporary vector $X$ is created corresponding to the first derivative of $V$ (1):

$$X = \{X_1 = V_2 - V_1, \ X_2 = V_3 - V_2, \ldots, \ X_{n-1} = V_n - V_{n-1}, X_n = 0\} \quad [1.1]$$

One or more subsets $C$ of $X$ are then created such that

$$C = \{C_i = X_i, C_{i+1} = X_{i+1}, \ldots, C_{i+m} = X_{i+m}\} \quad [1.2]$$

with

$m \in \mathbb{N}^+$

$|C_i|,|C_{i+1}|,\ldots,|C_{i+m-1}| \leq R$
$|C_{i+m}| > R$
$\max(V_i, V_{i+1}, \ldots, V_{i+m}) - \min(V_i, V_{i+1}, \ldots, V_{i+m}) \leq R$

For each subset $C$ the values in $V$ are then replaced such that

$$V_i = V_{i+1} = \cdots = V_{i+m} = \frac{(V_i + V_{i+1} + \cdots + V_{i+m})}{m+1} \quad [1.3]$$

This data resolution adjustment step results in a 'leveling' of stretches in the sensor data ($V$) that feature small fluctuations below the specified resolution ($R$) parameter.

*Data smoothing:*

A vector $X$ is created corresponding to the first derivative of $V$:

$$X = \{X_1 = V_2 - V_1, \ X_2 = V_3 - V_2, \ldots, \ X_{n-1} = V_n - V_{n-1}, X_n = 0\} \quad [2.1]$$

In addition, a vector $Q$ is created such that

$$Q = \left\{Q_1 = 1, Q_2 = \frac{X2}{X1}, \ldots, Q_n = \frac{X_n}{X_{n-1}}\right\} \quad [2.2]$$

One or more subsets $K$ of $X$ are then created such that <u>either</u>

$$K = \{K_i = X_i, K_{i+1} = X_{i+1}, \dots, K_{i+m} = X_{i+m}\} \quad [2.3]$$

with

$$m \in \mathbb{N}^+$$

$K_i, K_{i+1}, \dots, K_{i+m} > 0$

<u>or</u>

$$K = \{K_i = X_i, K_{i+1} = X_{i+1}, \dots, K_{i+m} = X_{i+m}\} \quad [2.4]$$

with

$$m \in \mathbb{N}^+$$

$K_i, K_{i+1}, \dots, K_{i+m} < 0$

For each subset $K$ created this way, a subset $Q_K$ is then created such that

$$Q_K = \{Q_i, Q_{i+1}, \dots, Q_{i+m}\} \quad [2.5]$$

It is then determined if

$$m > 4 \quad [2.6]$$

$$Q_i, Q_{i+1}, \dots, Q_{i+m} > 2.5 \quad [2.7]$$

If condition 2.6 is fulfilled and any of the values in $Q_K$ fulfills condition 2.7, an index $d_K$ will be created such that

$$i < d_K \leq m \quad [2.8]$$

$$Q_{i+d_K+1} \geq 2.5$$

$$Q_{i+d_K+2}, Q_{i+d_K+3}, \dots, Q_{i+m} \leq 2.5$$

A second index $e_K$ will also be created such that

$$e_K = \begin{cases} \dfrac{d_k - \min(i)}{2}, & if \; mod\left(\dfrac{d_k - m}{2}\right) = 0 \\ \dfrac{d_k - \min(i) + 1}{2}, & if \; mod\left(\dfrac{d_k - m}{2}\right) = 0.5 \end{cases} \quad [2.9]$$

The values in $V$ will then be replaced such that

$$V_i = V_{i+1} = \dots = V_{i+e_K} = D_1 \quad [2.10]$$

$$D_1 = \begin{cases} \max\left(V_i, V_{i+1}, \dots, V_{i+e_K}\right), & \text{if any of } X_i, X_{i+1}, \dots, X_{i+e_K} > 0 \\ \min\left(V_i, V_{i+1}, \dots, V_{i+e_K}\right), & \text{if any of } X_i, X_{i+1}, \dots, X_{i+e_K} < 0 \end{cases}$$

with                                                                        and

$$V_{i+e_K+1} = V_{i+e_K+2} = \cdots = V_{i+m} = D_2 \quad [2.11]$$

with $D_2 = V_{i+d_k}$

However, if condition 2.6 is not fulfilled or none of the values in $Q_K$ fulfills condition 2.7, instead an index $c_K$ will be created such that

$$c_K = \begin{cases} \dfrac{m}{2}, & \text{if } \bmod\left(\dfrac{m}{2}\right) = 0 \\[2ex] \dfrac{m+1}{2}, & \text{if } \bmod\left(\dfrac{m}{2}\right) = 0.5 \end{cases} \quad [2.12]$$

In this case, the values in $V$ will be replaced such that

$$V_i = V_{i+1} = \cdots = V_{i+m-c_K} = E \quad [2.13]$$

$$E = \begin{cases} \min\left(V_i, V_{i+1}, \dots, V_{i+m-c_k}\right), & \text{if } X_i, X_{i+1}, \dots, X_{i+m-c_k} > 0 \\ \max\left(V_i, V_{i+1}, \dots, V_{i+m-c_k}\right), & \text{if } X_i, X_{i+1}, \dots, X_{i+m-c_k} < 0 \end{cases}$$

with

$$V_{i+m-c_k+1} = V_{i+m-c_K+1} = \cdots = V_{i+m} = V_{i+m+1} = F \quad [2.14]$$

$$F = \begin{cases} \max\left(V_{i+m-c_{K+1}}, V_{i+m-c_K+1}, \dots, V_{i+m}, V_{i+m+1}\right), & \text{if } X_{i+m-c_{K+1}}, X_{i+m-c_K+2}, \dots, X_{i+m+1} > 0 \\ \min\left(V_{i+m-c_{K+1}}, V_{i+m-c_K+1}, \dots, V_{i+m}, V_{i+m+1}\right), & \text{if } X_{i+m-c_{K+1}}, X_{i+m-c_K+2}, \dots, X_{i+m+1} < 0 \end{cases}$$

with

This procedure results in a vector of adjusted values $V$ that has been 'smoothed' compared to the original values, i.e. spans in the data where the sensor data has been changing. The vector $V$ forms the basis for input of the data disaggregation method, i.e. the profiler layer.

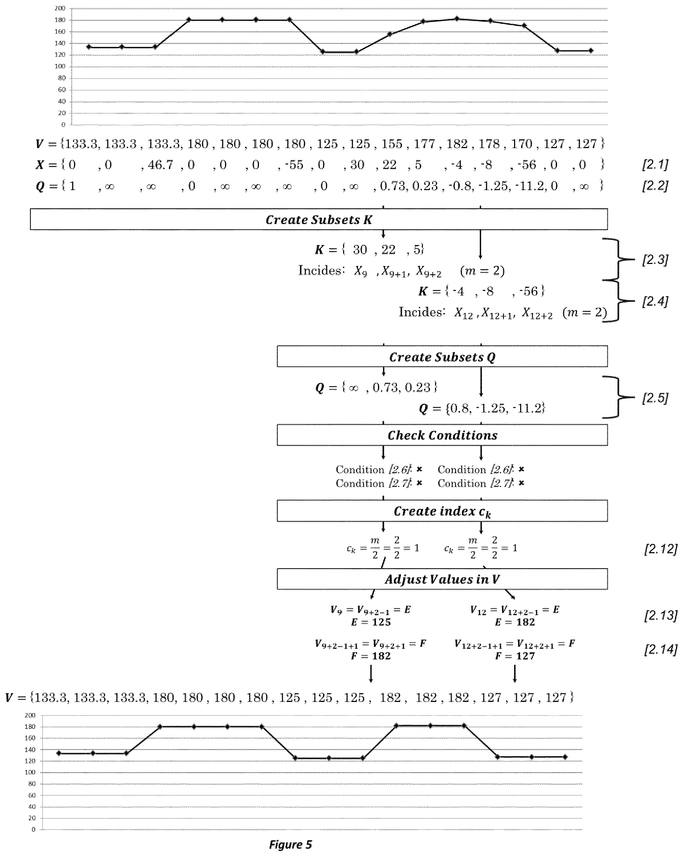

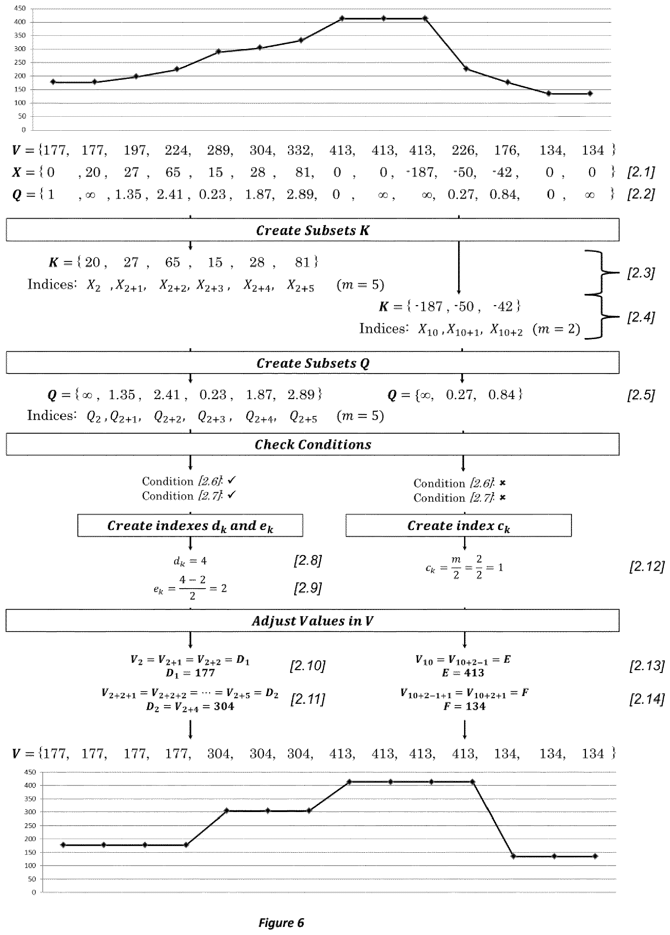

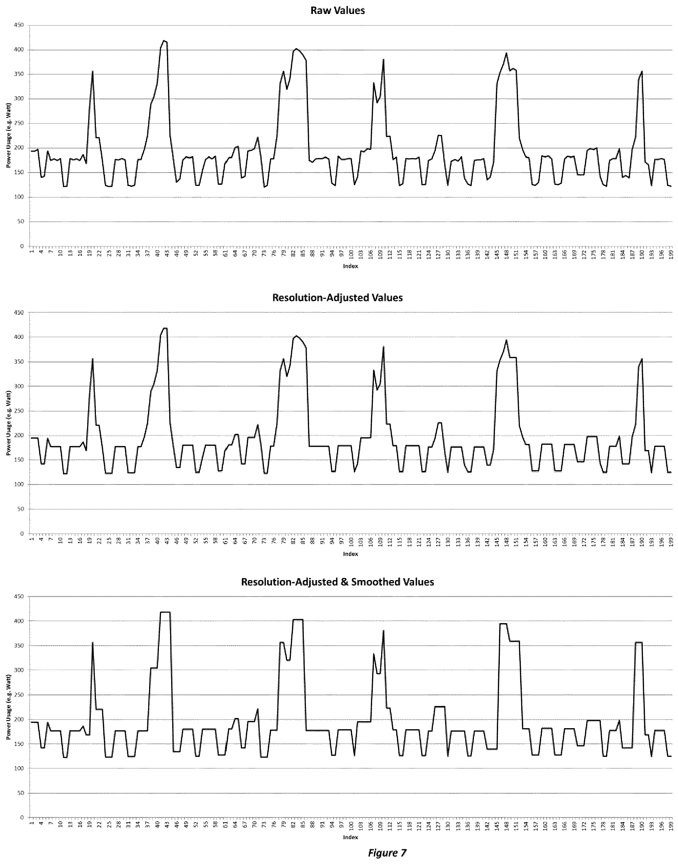

Reference is made to figure 4, which schematically shows the resolution adjustment as described above on a subset of sensor data. Further reference is made to figures 5 and 6, which show the data smoothing method as described above on a dataset for which conditions 2.6 and 2.7 are met (figure 5) or not met (figure 6). Finally, reference is also made to figure 7, which illustrates the difference between raw data, resolution-adjusted data and resolution-adjusted and smoothed data.

The data disaggregation method will then perform the following steps to extract energy loads, using said vector of processed values $V$ described before as a basis for its calculations.

*Energy load extraction:*

In a first step, a second vector of derivatives $W$ is created such that

$$W = \{W_1 = V_2 - V_1, W_2 = V_3 - V_2, \dots, W_{n-1} = V_n - V_{n-1}, W_n = 0\} \quad [3.1]$$

This vector forms the basis of the data disaggregation method, because it contains the actual increases and decreases in a sensor data stream that correspond to particular event, i.e. a user with a particular energy load turning on or off.

From this vector $W$, a sorted subset $Y$ is created such that

$$Y = \{Y_1, Y_2, \dots Y_l\} \in W \quad [3.2]$$

with $Y_1 > Y_2 > \cdots > Y_l > 0$

Additionally, a vector **a** is created such that

$$a = \{a_1, a_2, \ldots, a_{U_{max}}\} \quad [3.3]$$

with $0 < a_1 < a_2 < \cdots < a_{U_{max}} \leq n$

Components of **Y** are then grouped into vectors $\boldsymbol{U_1}, \boldsymbol{U_2}, \cdots, \boldsymbol{U_{U_{max}}}$ such that

$$\left. \begin{aligned} U_1 &= \{Y_1, Y_2, \ldots, Y_{a_1}\} \quad with \quad \frac{T}{100} \geq \frac{Y_1 - Y_{a_1}}{\left(\frac{Y_1 + Y_2 + \cdots + Y_{a_1}}{a_1}\right)} \\ U_2 &= (Y_{a_1+1}, Y_{a_1+2}, \ldots, Y_{a_1+a_2}) \quad with \quad \frac{T}{100} \geq \frac{Y_{a_1+1} - Y_{a_2}}{\left(\frac{Y_{a_1+1} + Y_{a_1+2} + \cdots + Y_{a_1+a_2}}{a_2 - a_1}\right)} \\ U_3 &= \cdots \end{aligned} \right\} \quad [3.4]$$

This process of combining components of **Y** into vectors is repeated until one of the following conditions is met:

1) A component $Y_i \in$ **Y** no longer fulfills the condition that

$$Y_i \geq \frac{Y_1 * P_{Tol}}{100}$$

In this case, the number of vectors $\boldsymbol{U_1}, \boldsymbol{U_2}, \ldots, \boldsymbol{U_y}$ created will be smaller than the parameter $U_{max}$ set by the user in the beginning (i.e. $y < U_{max}$), and the $U_{max}$ parameter will be adjusted so that

$$U_{max} = y \quad [3.5.1]$$

2) $a_{U_{max}} = n$, at which point all components of **Y** have been combined into one of the vectors

$$U_1, U_2, \ldots, U_{U_{max}} \quad [3.5.2]$$

3) All components of **Y** have been assigned to a vector $\boldsymbol{U_1}, \boldsymbol{U_2}, \ldots, \boldsymbol{U_y}$, with $y < U_{max}$. In this case, the $U_{max}$ parameter will also be adjusted so that

$$U_{max} = y \quad [3.5.3]$$

In a second step, vectors $\boldsymbol{P_1}, \boldsymbol{P_2}, \ldots, \boldsymbol{P_{U_{max}}}$ are created that are of equal length as vector **W** such that

$$P_1, P_2, \ldots, P_{U_{max}} \in \{0\}^n \quad [3.6]$$

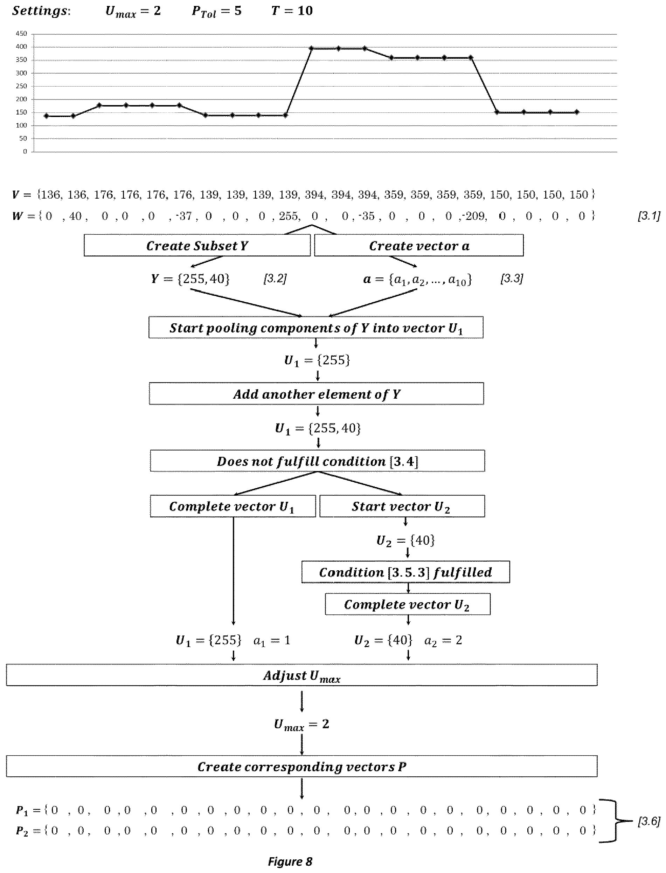

Reference is made to figure 8, which illustrates steps 1 and 2 of the energy load extraction method.

The third step consists of iteratively processing the values in **W** (denoted $W_i$) as follows:

➢ In the case that

$$W_i > 0 \quad [3.7]$$

It will be determined if $W_i$ is element of one of the vectors $\boldsymbol{U_1}, \boldsymbol{U_2}, \ldots, \boldsymbol{U_{U_{max}}}$. If that condition is given (e.g. $W_i \in \boldsymbol{U_2}$),

the components of this vector $\mathbf{P_2}$ will be altered such that

$$P_{2_i} = P_{2_{i+1}} = \ldots = P_{2_n} = 1 \quad [3.8]$$

➢ In the case that

$$W_i < 0 \quad [3.9]$$

A new set of vectors $\mathbf{Q}$ will then be created such that

$$\mathbf{Q} = \left\{ \mathbf{P_1} \middle| P_{1_i} = 1, \mathbf{P_2} \middle| P_{2_i} = 1, \ldots, \mathbf{P_{U_{max}}} \middle| P_{U_{max_i}} = 1 \right\} \quad [3.10]$$

If $\mathbf{Q}$ is not an empty set, for each of the vectors $\mathbf{P_l} \in \mathbf{Q}$ an index

$$k < i \quad [3.11]$$

will then be determined such that

$$P_{l_{k-1}} = 0$$

$$P_{l_k} = P_{l_{k+1}} = \cdots = P_{l_i} = 1$$

For each vector $\mathbf{P_l} \in \mathbf{Q}$ and its corresponding index $k$ as determined above, it will then be determined if

$$\frac{|W_k| + |W_i|}{2} * \frac{T}{100} > |W_i + W_k| \quad [3.12]$$

If that condition is met, the components of $P_l$ will be adjusted such that

$$P_{l_{i+1}} = \cdots = P_{l_n} = 0 \quad [3.13]$$

If this condition is met for multiple components of $\mathbf{Q}$, only the components of the vector $\mathbf{P_l} \in \mathbf{Q}$ will be adjusted for which $|W_i + W_k|$ is smallest.

However, if none of the vectors in Q fulfill the above condition, instead the components $R_j$ of the vector

$$\mathbf{R} = \left\{ k + 1, \ldots, i - 1 \right\}$$

will be used to test the condition:

$$\frac{|W_k| + |W_{R_j}| + |W_i|}{2} * \frac{T}{100} > \left| W_i + W_{R_j} + W_k \right| \quad [3.14]$$

If this condition is fulfilled, the smallest value of $R_j$ for which the condition is fulfilled will be used to adjust the components of the vector $\mathbf{P_l}$ such that

$$P_{l_{R_j}} = P_{l_{R_j}+1} = \cdots = P_{l_{i-1}} = 0.5$$

$$P_{l_i} = P_{l_{i+1}} = \cdots = P_{l_n} = 0$$

*[3.15]*

This procedure results in the vectors $P_1$, $P_2$, ..., $P_{U_{max}}$, all of which have length equal to $W$ such that

$$P_1, P_2, \ldots, P_{U_{max}} \in \{0, 0.5, 1\}^n$$

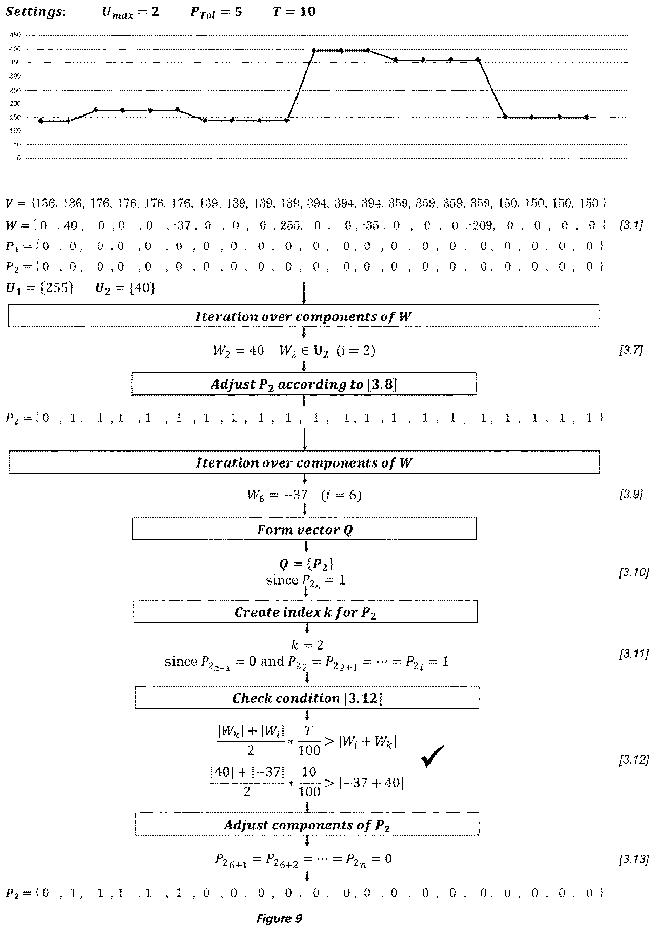

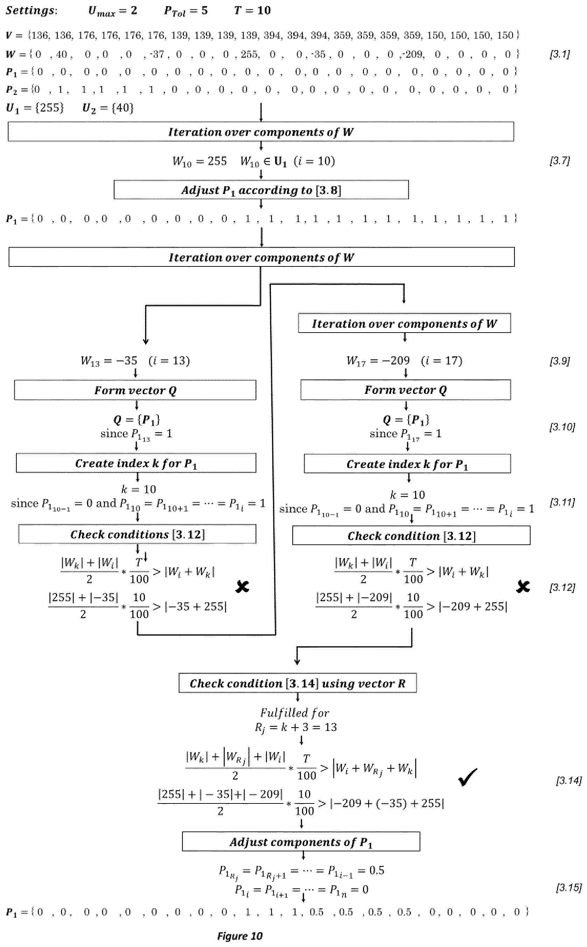

The elements of vectors $P_1$, $P_2$, ..., $P_{U_{max}}$ correspond to sensor data streams identified in the data $W$, where i.e. a value of 0 indicates that a user is not running while a value of 1 indicates that a user is running, and a value of 0.5 indicates that a user is partially running (e.g. a stove plate with multiple heat levels). Reference is made to figure 8, which illustrates steps 1 and 2 the energy load extraction procedure. Further reference is made to figures 9 and 10, which illustrate the procedure for step 3 in the energy load extraction procedure.

**Claims**

1.   A method for the simultaneous, synchronous and non-invasive monitoring, data logging, and data disaggregation from multiple power-, energy-, current-, voltage-, power factor- and frequency-sensors connected in an autonomous local network, comprising:

> A mediation layer to any computer in the network enabling detection and monitoring of any sensors that are also part of the autonomous local network, and storing the data monitored from said sensors in a standardized format;
> A profiler layer providing a data disaggregation algorithm that can directly be applied to the data stored in said standardized format;
> A web interface to access and control said mediation layer and said profiler layer by the user.

2.   The method of claim 1, wherein the mediation layer can be activated or inactivated via a web interface by the user.

3.   The method of claim 1, wherein the activation of the mediation layer will trigger a scan for any power-, energy-, current-, voltage-, power factor and power frequency sensors of the local network via said sensor's IP addresses.

4.   The method of claim 1, wherein a successful identification of a power-, energy-, current-, voltage-, power factor and power frequency sensor via its IP address will setup a data logging procedure from said sensor, this procedure comprising:

> Selection of a data logging algorithm designed specifically for logging data from the identified sensor;
> Initiation of a data log file on the computer hosting the mediation layer for storage of logged data from the identified sensor;
> Triggering of a data logging event at defined time intervals $\Delta \geq 60$ s repeatedly until the mediation layer is turned off by the user via the mediation layer.

5.   The method of claim 4, wherein the time interval $\Delta$ may be specified by the user via the web interface.

6.   The method of claim 4, wherein a data logging event is initiated by the mediation layer and comprises:

> A request to a sensor as identified via its IP address;
> Determination whether a response is received from said sensor;
> Abortion of the data logging event if no response is received from said sensor;
> Extraction of the value monitored by said sensor at the time of request using the previously selected algorithm for said sensor, the response being a character string;
> Storage of the extracted value and the timestamp at the time of request in a standardized format in the log file for said sensor.

7. The method of claim 1, wherein the profiler layer provides a method for data disaggregation that can be applied to the data stored in said standardized format used by the mediation layer, this data disaggregation method comprising:

A method for adjusting the data resolution;
A method for data smoothing;
A method for energy load extraction.

8. The method of claim 7, wherein the method for adjusting the data resolution comprises:

(A) Calculation of a vector $X$ corresponding to the first derivative of the sensor values $V$ stored in said standardized format such that

$$X = \{X_1 = V_2 - V_1, X_2 = V_3 - V_2, ..., X_{n-1} = V_n - V_{n-1}, X_n = 0\}$$

(B) Calculation of one or multiple subsets $C$ of $X$ such that

$$C = \{C_i = X_i, C_{i+1} = X_{i+1}, ..., C_{i+m} = X_{i+m}\}$$

with

$$m \in \mathbb{N}^+$$

$|C_i|, |C_{i+1}|, ..., |C_{i+m-1}| \leq R$
$|C_{i+m}| > R$
$\max(V_i, V_{i+1}, ..., V_{i+m}) - \min(V_i, V_{i+1}, ..., V_{i+m}) \leq R$

(C) Replacement of the values in $V$ for each subset of $C$ such that

$$V_i = V_{i+1} = \cdots = V_{i+m} = \frac{(V_i + V_{i+1} + \cdots + V_{i+m})}{m + 1}$$

9. The method of claim 7, wherein the method for data smoothing comprises:

(A) Calculation of a *vector $X$* corresponding to the first derivative of the sensor values $V$, said values of $V$ having been processed with the adjusting of data resolution method according to claim 8, such that

$$X = \{X_1 = V_2 - V_1, X_2 = V_3 - V_2, ..., X_{n-1} = V_n - V_{n-1}, X_n = 0\}$$

(B) Calculation of a vector $Q$ such that

$$Q = \left\{Q_1 = 1, Q_2 = \frac{X2}{X1}, ..., Q_n = \frac{X_n}{X_{n-1}}\right\}$$

(C) Calculation of one or multiple subsets $K$ of $X$ such that either

$$K = \{K_i = X_i, K_{i+1} = X_{i+1}, ..., K_{i+m} = X_{i+m}\}$$

with

$$m \in \mathbb{N}^+$$

$K_i, K_{i+1}, ..., K_{i+m} > 0$

<u>or</u>

**10**

$$K = \{K_i = X_i, K_{i+1} = X_{i+1}, ..., K_{i+m} = X_{i+m}\}$$

with

$$m \in \mathbb{N}^+$$

$K_i, K_{i+1}, ..., K_{i+m} < 0$

(D) Calculation of a vector $\boldsymbol{Q_K}$ for each subset $\boldsymbol{K}$ such that

$$\boldsymbol{Q_K} = \{Q_i, Q_{i+1}, ..., Q_{i+m}\}$$

**10.** The method of claim 9, wherein for each vector $\boldsymbol{Q_K}$ it is determined whether the conditions are met such that

$$m > 4$$

$$Q_i, Q_{i+1}, ..., Q_{i+m} > 2.5$$

**11.** The method of claim 10, wherein, if said conditions are met, indices $d_K$ and $e_K$ are calculated such that:

$$i < d_K \leq m$$

$$Q_{i+d_K+1} \geq 2.5$$

$$Q_{i+d_K+2}, Q_{i+d_K+3}, ..., Q_{i+m} \leq 2.5$$

$$e_K = \begin{cases} \dfrac{d_k - \min(i)}{2}, & if \ mod\left(\dfrac{d_k - m}{2}\right) = 0 \\ \dfrac{d_k - \min(i) + 1}{2}, & if \ mod\left(\dfrac{d_k - m}{2}\right) = 0.5 \end{cases}$$

**12.** The method of claim 11, wherein the values in $\boldsymbol{V}$, said values having been processed with the adjusting of data resolution method, will then be replaced such that

$$V_i = V_{i+1} = \cdots = V_{i+e_K} = D_1$$

$$D_1 = \begin{cases} \max(V_i, V_{i+1}, ..., V_{i+e_K}), & if \ any \ of \ X_i, X_{i+1}, ..., X_{i+e_K} > 0 \\ \min(V_i, V_{i+1}, ..., V_{i+e_K}), & if \ any \ of \ X_i, X_{i+1}, ..., X_{i+e_K} < 0 \end{cases}$$

with                                                                                                                  and

$$V_{i+e_K+1} = V_{i+e_K+2} = \cdots = V_{i+m} = D_2$$

with $D_2 = V_{i+d_k}$

**13.** The method of claim 10, wherein, if said conditions are not met, an index $c_K$ will be calculated such that

$$c_K = \begin{cases} \dfrac{m}{2}, & if\ mod\left(\dfrac{m}{2}\right) = 0 \\ \dfrac{m+1}{2}, & if\ mod\left(\dfrac{m}{2}\right) = 0.5 \end{cases}$$

**14.** The method of claim 13, wherein the values in **V**, said values having been processed with the adjusting of data resolution method, will be replaced such that:

$$V_i = V_{i+1} = \cdots = V_{i+m-c_K} = E$$

with $E = \begin{cases} \min(V_i, V_{i+1}, \ldots, V_{i+m-c_k}), if\ X_i, X_{i+1}, \ldots, X_{i+m-c_k} > 0 \\ \max(V_i, V_{i+1}, \ldots, V_{i+m-c_k}), if\ X_i, X_{i+1}, \ldots, X_{i+m-c_k} < 0 \end{cases}$ and

$$V_{i+m-c_k+1} = V_{i+m-c_K+1} = \cdots = V_{i+m} = V_{i+m+1} = F$$

with $F = \begin{cases} \max(V_{i+m-c_{K+1}}, V_{i+m-c_K+1}, \ldots, V_{i+m}, V_{i+m+1}), if\ X_{i+m-c_{K+1}}, X_{i+m-c_K+2}, \ldots, X_{i+m+1} > 0 \\ \min(V_{i+m-c_{K+1}}, V_{i+m-c_K+1}, \ldots, V_{i+m}, V_{i+m+1}), if\ X_{i+m-c_{K+1}}, X_{i+m-c_K+2}, \ldots, X_{i+m+1} < 0 \end{cases}$

**15.** The method of claim 7, wherein the method for energy load extraction comprises:

(A) Calculation of a vector **W** corresponding to the first derivative of the sensor values **V**, said values having been processed with the data smoothing method, such that:

$$W = \{W_1 = V_2 - V_1,\ W_2 = V_3 - V_2, \ldots,\ W_{n-1} = V_n - V_{n-1}, W_n = 0\}$$

(B) Calculation of a sorted subset vector **Y** such that:

$$Y = \{Y_1, Y_2, \ldots Y_l\} \in W$$

with $Y_1 > Y_2 > \cdots > Y_l > 0$
(C) Calculation of a vector **a** such that

$$a = \{a_1, a_2, \ldots, a_{U_{max}}\}$$

with $0 < a_1 < a_2 < \cdots < a_{U_{max}} \leq n$

**16.** The method of claim 15, wherein the components of each vector **Y** are then further grouped into vectors $U_1$, $U_2$, ..., $U_{U_{max}}$ such that

$$U_1 = \{Y_1, Y_2, \ldots, Y_{a_1}\} \quad with \quad \frac{T}{100} \geq \frac{Y_1 - Y_{a_1}}{\left(\frac{Y_1 + Y_2 + \cdots + Y_{a_1}}{a_1}\right)}$$

$$U_2 = (Y_{a_1+1}, Y_{a_1+2}, \ldots, Y_{a_1+a_2}) \quad with \quad \frac{T}{100} \geq \frac{Y_{a_1+1} - Y_{a_2}}{\left(\frac{Y_{a_1+1} + Y_{a_1+2} + \cdots + Y_{a_1+a_2}}{a_2 - a_1}\right)}$$

$$U_3 = \cdots$$

**17.** The method of claim 16, wherein the process of grouping components of **Y** is repeated until one of the following conditions is met:

(1) A component $Y_i \in \mathbf{Y}$ no longer fulfills the condition that

$$Y_i \geq \frac{Y_1 * P_{Tol}}{100}$$

If this condition is fulfilled, this indicates that the number of vectors $\mathbf{U_1}, \mathbf{U_2}, ..., \mathbf{U_y}$ is smaller than the maximum number of vectors $U_{max}$ specified by the user (i.e. $y < U_{max}$), resulting in an adjustment of the $U_{max}$ parameter such that

$$U_{max} = y$$

(2) The condition

$$a_{U_{max}} = n$$

is fulfilled, indicating that all components of **Y** have been grouped into one of the vectors $\mathbf{U_1}, \mathbf{U_2}, ..., \mathbf{U_{U_{max}}}$
(3) All components of **Y** have been assigned to a vector $\mathbf{U_1}, \mathbf{U_2}, ..., \mathbf{U_y}$ such that

$$y < U_{max}$$

This results in adjustment of the $U_{max}$ parameter such that

$$U_{max} = y$$

**18.** The method of claim 15, wherein vectors $\mathbf{P_1, P_2, ..., P_{U_{max}}}$ are created that are of equal length as vector **W** such that

$$\mathbf{P_1, P_2, ..., P_{U_{max}}} \in \{0\}^n$$

**19.** The method of claim 15, wherein the values $W_1, W_2, ... W_n \in \mathbf{W}$ are processed in order $W_1 \rightarrow W_2 \rightarrow ... \rightarrow W_n$, and each processed value, denoted $W_i$, is evaluated based on the following conditions:

(1) If

$$W_i > 0$$

It will be determined whether $W_i$ is element of one of the vectors $\mathbf{U_1, U_2, ..., U_{U_{max}}}$ according to claim 16. If that condition is given (i.e. $W_i \in \mathbf{U_k}$), the components of the corresponding vector $\mathbf{P_k}$ according to claim 18 will be altered such that

$$P_{k_i} = P_{k_{i+1}} = ... = P_{k_n} = 1$$

(2) If

$$W_i < 0$$

A new set of vectors **Q** will then be created such that

$$Q = \{ \mathbf{P_1} | P_{1_i} = 1, \mathbf{P_2} | P_{2_i} = 1, \dots, \mathbf{P_{U_{max}}} | P_{U_{max_i}} = 1 \}$$

**20.** The method of claim 19, wherein, if said created vector **Q** is not an empty set, an index

$$k < i$$

will be calculated for each of the vectors $\mathbf{P_l} \in \mathbf{Q}$ such that

$$P_{l_{k-1}} = 0$$

$$P_{l_k} = P_{l_{k+1}} = \dots = P_{l_i} = 1$$

**21.** The method of claim 20, wherein, for each vector $\mathbf{P_l} \in \mathbf{Q}$ and its corresponding index $k$, it will then be determined if

$$\frac{|W_k| + |W_i|}{2} * \frac{T}{100} > |W_i + W_k|$$

**22.** The method of claim 21, wherein, If said condition is met, the components of $\mathbf{P_l} \in \mathbf{Q}$ according to claim 19 will be adjusted such that

$$P_{l_{i+1}} = \dots = P_{l_n} = 0$$

Further, if said condition is met for multiple components of **Q,** only the components of the vector $\mathbf{P_l} \in \mathbf{Q}$ according to claim 19 will be adjusted for which $|W_i + W_k|$ is smallest.

**23.** The method of claim 21, wherein, if said condition is not met, the components of the vector

$$\mathbf{R} = \{ k + 1, \dots, i - 1 \}$$

will be created and its components $R_j \in \mathbf{R}$ will be used to evaluate the condition:

$$\frac{|W_k| + \left|W_{R_j}\right| + |W_i|}{2} * \frac{T}{100} > \left|W_i + W_{R_j} + W_k\right|$$

**24.** The method of claim 23, wherein the smallest value of $R_j$ for which the condition is fulfilled will be used to adjust the components of vector $\mathbf{P_l} \in \mathbf{Q}$ according to claim 19 such that

$$P_{l_{R_j}} = P_{l_{R_j+1}} = \dots = P_{l_{i-1}} = 0.5$$

$$P_{l_i} = P_{l_{i+1}} = \dots = P_{l_n} = 0$$

Figure 1

**Figure 2**

*Logging Event*
*Triggered by Mediation Layer*

Request to Sensor via IP (1)

Response received? (2)

Yes

No

Extract Power Usage Values from Response Using the Sensor-Specific Algorithm (3)

Abort Logging Event (5)

Save Extracted Values to Sensor Log File (4)

*Figure 3*

**Settings**: $R = 35$

$V = \{131, 131, 138, 176, 182, 180, 182, 125, 125, 155, 177, 182, 178, 170, 127, 127\}$

$X = \{0\ ,7\ ,38\ ,6\ ,-2\ ,2\ ,-57,0\ ,30\ ,22\ ,5\ ,-4\ ,-8\ ,-43,0\ ,0\ \}$    [1.1]

| Create Subsets |
| --- |

$C = \{0\ ,7\ ,38\}$

$C = \{6\ ,-2\ ,2\ ,-57\}$     **X**

~~$C = \{0\ ,30\ ,22\ ,5\ ,-4\ ,-8\ ,-43\}$~~

               [1.2]

| Get Subsets of V |
| --- |

$\{131, 131, 138\}$

$\{176, 182, 180, 182\}$

*This will not be a subset because it does **not** fulfill the condition that*
$\max(125, 125, 155, 177, 182, 178, 170) - \min(125, 125, 155, 177, 182, 178, 170) \leq R$

| Adjust Subsets |
| --- |

$\{133.3, 133.3, 133.3\}$

$\{180, 180, 180, 180\}$

| Adjust V |
| --- |

$V = \{133.3, 133.3, 133.3, 180, 180, 180, 180, 125, 125, 155, 177, 182, 178, 170, 127, 127\}$    [1.3]

Figure 4

$V = \{133.3, 133.3\,, 133.3\,, 180\,, 180\,, 180\,, 180\,, 125\,, 125\,, 155\,, 177\,, 182\,, 178\,, 170\,, 127\,, 127\,\}$

$X = \{\,0 \quad,0 \quad, 46.7\,, 0 \quad, 0 \quad, 0 \quad, \text{-}55\,, 0 \quad, 30 \quad, 22 \quad, 5 \quad, \text{-}4 \quad, \text{-}8 \quad, \text{-}56\,, 0 \quad, 0 \quad\}$  *[2.1]*

$Q = \{\,1 \quad, \infty \quad, \infty \quad, 0 \quad, \infty \quad, \infty \quad, \infty \quad, 0 \quad, \infty \quad, 0.73, 0.23\,, \text{-}0.8, \text{-}1.25, \text{-}11.2, 0 \quad, \infty \quad\}$  *[2.2]*

| *Create Subsets K* |
|---|

$K = \{\,30 \quad, 22 \quad, 5\}$
Incides:  $X_9\,, X_{9+1},\ X_{9+2} \quad (m = 2)$   *[2.3]*

$K = \{\,\text{-}4 \quad, \text{-}8 \quad, \text{-}56\,\}$
Incides:  $X_{12}\,, X_{12+1},\ X_{12+2}\ \ (m = 2)$   *[2.4]*

| *Create Subsets Q* |
|---|

$Q = \{\,\infty \quad, 0.73, 0.23\,\}$

$Q = \{0.8, \text{-}1.25, \text{-}11.2\}$   *[2.5]*

| *Check Conditions* |
|---|

Condition *[2.6]*: ✗   Condition *[2.6]*: ✗
Condition *[2.7]*: ✗   Condition *[2.7]*: ✗

| *Create index $c_k$* |
|---|

$c_k = \dfrac{m}{2} = \dfrac{2}{2} = 1 \qquad c_k = \dfrac{m}{2} = \dfrac{2}{2} = 1$   *[2.12]*

| *Adjust Values in V* |
|---|

$V_9 = V_{9+2-1} = E \qquad\qquad V_{12} = V_{12+2-1} = E$
$\quad\ E = 125 \qquad\qquad\qquad\qquad\quad E = 182$   *[2.13]*

$V_{9+2-1+1} = V_{9+2+1} = F \quad V_{12+2-1+1} = V_{12+2+1} = F$
$\qquad\quad F = 182 \qquad\qquad\qquad\qquad F = 127$   *[2.14]*

$V = \{133.3, 133.3, 133.3, 180, 180\,, 180\,, 180\,, 125\,, 125\,, 125\,, 182\,, 182\,, 182\,, 127\,, 127\,, 127\,\}$

**Figure 5**

$V = \{177, \quad 177, \quad 197, \quad 224, \quad 289, \quad 304, \quad 332, \quad 413, \quad 413, \quad 413, \quad 226, \quad 176, \quad 134, \quad 134 \}$

$X = \{0 \quad , 20 , \quad 27 , \quad 65 , \quad 15 , \quad 28 , \quad 81, \quad 0 , \quad 0, \; \text{-}187, \; \text{-}50, \; \text{-}42 , \quad 0 , \quad 0 \}$    [2.1]

$Q = \{1 \quad , \infty , \; 1.35 , \; 2.41 , \; 0.23 , \; 1.87 , \; 2.89, \quad 0 , \quad \infty, \quad \infty, \; 0.27, \; 0.84, \quad 0 , \quad \infty \}$    [2.2]

**Create Subsets K**

$K = \{20 , \quad 27 , \quad 65 , \quad 15 , \quad 28 , \quad 81\}$

Indices: $X_2 , X_{2+1}, \; X_{2+2}, \; X_{2+3} , \; X_{2+4}, \; X_{2+5} \quad (m = 5)$    [2.3]

$K = \{\text{-}187 , \text{-}50 , \quad \text{-}42 \}$

Indices: $X_{10} , X_{10+1}, \; X_{10+2} \quad (m = 2)$    [2.4]

**Create Subsets Q**

$Q = \{\infty , \quad 1.35 , \quad 2.41 , \quad 0.23 , \quad 1.87 , \quad 2.89\}$      $Q = \{\infty, \quad 0.27, \quad 0.84\}$    [2.5]

Indices: $Q_2 , Q_{2+1}, \quad Q_{2+2}, \quad Q_{2+3} , \quad Q_{2+4}, \quad Q_{2+5} \quad (m = 5)$

**Check Conditions**

Condition [2.6]: ✓                Condition [2.6]: ✗
Condition [2.7]: ✓                Condition [2.7]: ✗

**Create indexes $d_k$ and $e_k$**          **Create index $c_k$**

$d_k = 4$    [2.8]           $c_k = \dfrac{m}{2} = \dfrac{2}{2} = 1$    [2.12]

$e_k = \dfrac{4 - 2}{2} = 2$    [2.9]

**Adjust Values in V**

$V_2 = V_{2+1} = V_{2+2} = D_1$    [2.10]      $V_{10} = V_{10+2-1} = E$    [2.13]
$D_1 = 177$                             $E = 413$

$V_{2+2+1} = V_{2+2+2} = \cdots = V_{2+5} = D_2$    [2.11]    $V_{10+2-1+1} = V_{10+2+1} = F$    [2.14]
$D_2 = V_{2+4} = 304$                             $F = 134$

$V = \{177, \quad 177, \quad 177, \quad 177, \quad 304, \quad 304, \quad 304, \quad 413, \quad 413, \quad 413, \quad 413, \quad 134, \quad 134, \quad 134 \}$

*Figure 6*

Figure 7

**Settings:**     $U_{max} = 2$     $P_{Tol} = 5$     $T = 10$

$V = \{136, 136, 176, 176, 176, 176, 139, 139, 139, 139, 394, 394, 394, 359, 359, 359, 359, 150, 150, 150, 150\}$

$W = \{0\ , 40\ ,\ 0\ , 0\ ,\ 0\ , -37,\ 0\ ,\ 0\ ,\ 0\ , 255,\ 0\ ,\ 0, -35,\ 0\ ,\ 0\ ,\ 0\ , -209,\ 0\ ,\ 0\ ,\ 0\ ,\ 0\ \}$     [3.1]

| Create Subset Y | Create vector a |
|---|---|

$Y = \{255, 40\}$     [3.2]          $a = \{a_1, a_2, \dots, a_{10}\}$     [3.3]

**Start pooling components of Y into vector $U_1$**

$U_1 = \{255\}$

**Add another element of Y**

$U_1 = \{255, 40\}$

**Does not fulfill condition [3.4]**

| Complete vector $U_1$ | Start vector $U_2$ |
|---|---|

$U_2 = \{40\}$

**Condition [3.5.3] fulfilled**

**Complete vector $U_2$**

$U_1 = \{255\}$   $a_1 = 1$          $U_2 = \{40\}$   $a_2 = 2$

**Adjust $U_{max}$**

$U_{max} = 2$

**Create corresponding vectors P**

$P_1 = \{0\ ,\ 0,\ 0\ , 0\ ,\ 0\ ,\ 0\ ,\ 0\ ,\ 0\ ,\ 0\ ,\ 0\ ,\ 0\ ,\ 0, 0\ ,\ 0\ ,\ 0\ ,\ 0\ ,\ 0,\ 0\ ,\ 0\ ,\ 0\ ,\ 0\ \}$

$P_2 = \{0\ ,\ 0,\ 0\ , 0\ ,\ 0\ ,\ 0\ ,\ 0\ ,\ 0\ ,\ 0\ ,\ 0\ ,\ 0\ ,\ 0, 0\ ,\ 0\ ,\ 0\ ,\ 0\ ,\ 0,\ 0\ ,\ 0\ ,\ 0\ ,\ 0\ \}$     [3.6]

*Figure 8*

**Settings:** $U_{max} = 2$ $\quad P_{Tol} = 5$ $\quad T = 10$

$V = \{136, 136, 176, 176, 176, 176, 139, 139, 139, 139, 394, 394, 394, 359, 359, 359, 359, 150, 150, 150, 150\}$

$W = \{0, 40, 0, 0, 0, \text{-}37, 0, 0, 0, 255, 0, 0, \text{-}35, 0, 0, 0, \text{-}209, 0, 0, 0, 0\}$ [3.1]

$P_1 = \{0, 0, 0, 0, 0, 0, 0, 0, 0, 0, 0, 0, 0, 0, 0, 0, 0, 0, 0, 0, 0\}$

$P_2 = \{0, 0, 0, 0, 0, 0, 0, 0, 0, 0, 0, 0, 0, 0, 0, 0, 0, 0, 0, 0, 0\}$

$U_1 = \{255\}$ $\quad U_2 = \{40\}$

| *Iteration over components of W* |
| :---: |

$$W_2 = 40 \quad W_2 \in \mathbf{U}_2 \ (\text{i} = 2)$$ [3.7]

| *Adjust $P_2$ according to* [3.8] |
| :---: |

$P_2 = \{0, 1, 1, 1, 1, 1, 1, 1, 1, 1, 1, 1, 1, 1, 1, 1, 1, 1, 1, 1, 1\}$

| *Iteration over components of W* |
| :---: |

$$W_6 = -37 \quad (i = 6)$$ [3.9]

| *Form vector Q* |
| :---: |

$$Q = \{P_2\}$$
$$\text{since } P_{2_6} = 1$$ [3.10]

| *Create index k for $P_2$* |
| :---: |

$$k = 2$$
$$\text{since } P_{2_{2-1}} = 0 \text{ and } P_{2_2} = P_{2_{2+1}} = \cdots = P_{2_i} = 1$$ [3.11]

| *Check condition* [3.12] |
| :---: |

$$\frac{|W_k| + |W_i|}{2} * \frac{T}{100} > |W_i + W_k|$$

$$\frac{|40| + |-37|}{2} * \frac{10}{100} > |-37 + 40|$$ [3.12]

| *Adjust components of $P_2$* |
| :---: |

$$P_{2_{6+1}} = P_{2_{6+2}} = \cdots = P_{2_n} = 0$$ [3.13]

$P_2 = \{0, 1, 1, 1, 1, 1, 0, 0, 0, 0, 0, 0, 0, 0, 0, 0, 0, 0, 0, 0, 0\}$

*Figure 9*

**Settings:**   $U_{max} = 2$   $P_{Tol} = 5$   $T = 10$

$V = \{136, 136, 176, 176, 176, 176, 139, 139, 139, 139, 394, 394, 394, 359, 359, 359, 359, 150, 150, 150, 150\}$

$W = \{0, 40, 0, 0, 0, -37, 0, 0, 0, 255, 0, 0, -35, 0, 0, 0, -209, 0, 0, 0, 0\}$  [3.1]

$P_1 = \{0, 0, 0, 0, 0, 0, 0, 0, 0, 0, 0, 0, 0, 0, 0, 0, 0, 0, 0, 0, 0\}$

$P_2 = \{0, 1, 1, 1, 1, 1, 0, 0, 0, 0, 0, 0, 0, 0, 0, 0, 0, 0, 0, 0, 0\}$

$U_1 = \{255\}$   $U_2 = \{40\}$

---

**Iteration over components of W**

$W_{10} = 255$   $W_{10} \in U_1$   $(i = 10)$   [3.7]

**Adjust $P_1$ according to [3.8]**

$P_1 = \{0, 0, 0, 0, 0, 0, 0, 0, 0, 1, 1, 1, 1, 1, 1, 1, 1, 1, 1, 1, 1\}$

**Iteration over components of W**

---

$W_{13} = -35$   $(i = 13)$

**Form vector Q**

$Q = \{P_1\}$
since $P_{1_{13}} = 1$

**Create index k for $P_1$**

$k = 10$
since $P_{1_{10-1}} = 0$ and $P_{1_{10}} = P_{1_{10+1}} = \cdots = P_{1_i} = 1$

**Check conditions [3.12]**

$\dfrac{|W_k| + |W_i|}{2} * \dfrac{T}{100} > |W_i + W_k|$

$\dfrac{|255| + |-35|}{2} * \dfrac{10}{100} > |-35 + 255|$   ✘

---

**Iteration over components of W**

$W_{17} = -209$   $(i = 17)$   [3.9]

**Form vector Q**

$Q = \{P_1\}$
since $P_{1_{17}} = 1$   [3.10]

**Create index k for $P_1$**

$k = 10$
since $P_{1_{10-1}} = 0$ and $P_{1_{10}} = P_{1_{10+1}} = \cdots = P_{1_i} = 1$   [3.11]

**Check condition [3.12]**

$\dfrac{|W_k| + |W_i|}{2} * \dfrac{T}{100} > |W_i + W_k|$

$\dfrac{|255| + |-209|}{2} * \dfrac{10}{100} > |-209 + 255|$   ✘   [3.12]

---

**Check condition [3.14] using vector R**

Fulfilled for
$R_j = k + 3 = 13$

$\dfrac{|W_k| + |W_{R_j}| + |W_i|}{2} * \dfrac{T}{100} > |W_i + W_{R_j} + W_k|$   ✔   [3.14]

$\dfrac{|255| + |-35| + |-209|}{2} * \dfrac{10}{100} > |-209 + (-35) + 255|$

**Adjust components of $P_1$**

$P_{1_{R_j}} = P_{1_{R_j+1}} = \cdots = P_{1_{i-1}} = 0.5$

$P_{1_i} = P_{1_{i+1}} = \cdots = P_{1_n} = 0$   [3.15]

$P_1 = \{0, 0, 0, 0, 0, 0, 0, 0, 0, 1, 1, 1, 0.5, 0.5, 0.5, 0.5, 0, 0, 0, 0, 0\}$

*Figure 10*

Europäisches
Patentamt

European
Patent Office

Office européen
des brevets

# EUROPEAN SEARCH REPORT

Application Number

EP 16 02 0486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/101653 A1 (TRAN BAO [US]) 26 April 2012 (2012-04-26) * Abstract, Desc. [0006]-[0010], [0035], [0098], Figs. 1, 5 * | 1-6 | INV. G01D4/00 |
| X | US 2014/129160 A1 (TRAN BAO [US]) 8 May 2014 (2014-05-08) * Abstract, Desc. [0006]-[0012], [0103], [0125]-[0126], Fig. 1 * | 1,2 | |
| X | US 2013/110621 A1 (GUPTA ABHAY [US] ET AL) 2 May 2013 (2013-05-02) * Abstract, Desc. [0002]-[0003], [0075], [0129]-[0131], Fig. 4 * | 1,2 | |
| A | | 3-6 | |
| X | EP 2 290 328 A1 (ACCENTURE GLOBAL SERVICES GMBH [CH]) 2 March 2011 (2011-03-02) * Abstract, Desc. [0040]-[0048], Fig. 2 * | 1,2 | |
| A | | 3-6 | TECHNICAL FIELDS SEARCHED (IPC) |
| A | EP 2 456 084 A1 (CORNEX COMM CORP [CA]) 23 May 2012 (2012-05-23) * Abstract, Desc. [0101]-[0102] * | 1-6 | G01D |

~~The present search report has been drawn up for all claims~~

| Place of search | Date of completion of the search | Examiner |
|---|---|---|
| Munich | 23 May 2017 | Reim, Klaus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  ..............................................................................

& : member of the same patent family, corresponding
document

EPO FORM 1503 03.82 (P04C01)

Europäisches
Patentamt

European
Patent Office

Office européen
des brevets

Application Number

EP 16 02 0486

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 16 02 0486

The Search Division considers that the present European patent application does not comply with the requirements of unity of invention and relates to several inventions or groups of inventions, namely:

1. claims: 1-6

   A method for the simultaneous, synchronous and non-invasive monitoring, data logging, and data disaggregation from multiple power-, energy-, current-, voltage-, power factor-and frequency-sensors connected in an autonomous local network, solving the problem of registering and organising the sensors employed across the network.
   The special technical features (STF) in the sense of Rule 44(1) EPC are in this case that the activation of the mediation layer will trigger a scan for any power-, energy-, current-, voltage-, power factor and power frequency sensors of the local network via said sensor's IP addresses.
   ---

2. claims: 7-24

   A method for the simultaneous, synchronous and non-invasive monitoring, data logging, and data disaggregation from multiple power-, energy-, current-, voltage-, power factor-and frequency-sensors connected in an autonomous local network, solving the problem of simplifying the data disaggregation process, thereby reducing computational power required.
   The special technical features (STF) in the sense of Rule 44(1) EPC are in this case that the profiler layer provides a method for data disaggregation that can be applied to the data stored in said standardized format used by the mediation layer, this data disaggregation method including a
   1. method for adjusting the data resolution,
   2. method for data smoothing, and
   3. method for energy load extraction.
   ---

## ANNEX TO THE EUROPEAN SEARCH REPORT
## ON EUROPEAN PATENT APPLICATION NO.

EP 16 02 0486

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2017

| Patent document cited in search report | | Publication date | Patent family member(s) | | Publication date |
|---|---|---|---|---|---|
| US 2012101653 | A1 | 26-04-2012 | NONE | | |
| US 2014129160 | A1 | 08-05-2014 | US 2014129160 A1 | | 08-05-2014 |
| | | | US 2016035052 A1 | | 04-02-2016 |
| US 2013110621 | A1 | 02-05-2013 | AU 2012211955 A1 | | 12-09-2013 |
| | | | AU 2016200264 A1 | | 11-02-2016 |
| | | | EP 2671178 A2 | | 11-12-2013 |
| | | | US 2013110621 A1 | | 02-05-2013 |
| | | | WO 2012106709 A2 | | 09-08-2012 |
| EP 2290328 | A1 | 02-03-2011 | AU 2010206063 A1 | | 10-03-2011 |
| | | | CA 2711994 A1 | | 24-02-2011 |
| | | | EP 2290328 A1 | | 02-03-2011 |
| | | | HK 1155219 A1 | | 21-08-2015 |
| | | | US 2011046904 A1 | | 24-02-2011 |
| EP 2456084 | A1 | 23-05-2012 | CA 2758681 A1 | | 23-05-2012 |
| | | | CA 2758683 A1 | | 23-05-2012 |
| | | | CA 2758725 A1 | | 23-05-2012 |
| | | | EP 2455719 A2 | | 23-05-2012 |
| | | | EP 2456083 A2 | | 23-05-2012 |
| | | | EP 2456084 A1 | | 23-05-2012 |
| | | | ES 2523497 T3 | | 26-11-2014 |
| | | | ES 2528615 T3 | | 11-02-2015 |
| | | | HK 1173572 A1 | | 26-08-2016 |
| | | | US 2012126790 A1 | | 24-05-2012 |
| | | | US 2012126994 A1 | | 24-05-2012 |
| | | | US 2012126995 A1 | | 24-05-2012 |
| | | | US 2015185046 A1 | | 02-07-2015 |
| | | | US 2015212122 A1 | | 30-07-2015 |
| | | | US 2015325114 A1 | | 12-11-2015 |

EPO FORM P0459

For more details about this annex : see Official Journal of the European Patent Office, No. 12/82